# EUROPEAN PATENT SPECIFICATION

(11) **EP 2 066 958 B1**
(45) Date of publication and mention of the grant of the patent: **01.02.2017**
(21) Application number: 07823137.0
(22) Date of filing: 19.09.2007
(51) Int. Cl.: F16L 59/14, D01G 11/00, D04H 1/4209, D04H 1/4274, F16L 59/04

(54) **PIPE SECTION FOR INSULATION OF PIPES, ITS MANUFACTURING METHOD AND SYSTEM**
ROHRABSCHNITT ZUR ISOLIERUNG VON ROHREN, HERSTELLUNGSVERFAHREN DAFÜR UND SYSTEM
SECTION DE TUYAU POUR ISOLATION DE TUYAUX, SON PROCÉDÉ ET SON SYSTÈME DE FABRICATION

(30) Priority: 21.09.2006 FI 20065578
(43) Date of publication of application: 10.06.2009
(73) Proprietor: Paroc Group Oy, 00180 Helsinki (FI)
(72) Inventor: NIKKINEN, Matti, FI-53500 Lappeenranta (FI); MIKSZATH, Julius, S-SE-54132 Skövde (SE)
(74) Representative: LEITZINGER OY
(86) International application number: PCT/FI2007/050500
(87) International publication number: WO 2008/034951

(56) References cited:
- WO-A1-90/12139
- WO-A1-98/56723
- DE-A1- 4 122 334
- DE-B- 1 021 781
- US-A- 2 925 117
- US-A- 3 642 554
- US-A- 4 128 678
- US-A- 4 396 561
- US-A- 4 950 444
- US-A- 5 167 738

## Description

One object of this invention is a manufacturing method for a pipe section of mineral wool for insulation of pipes, wherein a block of cured pipe section, emerging from the production line and consisting essentially of mineral wool which contains at least a binder and possibly also other additives, is brought to its final shape by cutting off its uneven ends.

Another object of this invention is a manufacturing system for a pipe section of mineral wool for insulation of pipes, wherein a block of cured pipe section, emerging from the production line and consisting essentially of mineral wool which contains at least a binder and possibly also other additives, is brought to its final shape by cutting off its uneven ends.

In this application, the term "mineral wool mat" is used in reference to both a conventionally manufactured, still uncured mineral wool mat and a thinner segment (lamella) of the mat obtained by cutting from such a mineral wool mat.

Currently employed manufacturing methods for blocks of pipe section produce lots of material waste. The largest amounts of waste originate from the ends of blocks of pipe section, which are cut off for providing the blocks of pipe section with trimmed ends. This amount of waste is about 10% of the amount of used raw material. This waste material is currently used as a raw material for blowing wool and HT bricks, but some of this material is also shipped to a landfill. The waste originating from machines which produce or process other mineral wool products would be enough for providing a sufficient amount of raw material for blowing wool and HT brick. If the ends could be completely recycled in the production of blocks of pipe section, the waste load could be reduced considerably. At the same time, less raw wool would be needed for the manufacture of blocks of pipe section.

If the cut-off ends of blocks of pipe section could be completely recycled in a manufacturing method for blocks of pipe section, the transport costs could also be reduced. The cut-off ends would not require shipping or conveying to manufacturing sites for other products away from the manufacturing site of pipe sections by being reusable in the same method or process that creates them.

An objective of this invention is to eliminate the foregoing drawbacks and to present a manufacturing method and system for pipe sections, whereby material waste problems can be mitigated or eliminated almost totally or even completely.

In view of the above objective, the method of the invention is characterized in that at least a part of the cut-off ends of the blocks of pipe section are recovered, chopped to pieces and returned to an earlier stage of the production line, and, along with all materials contained therein, are reused in at least one previous manufacturing stage of said blocks of pipe section by adding the same on top of a still uncured, binder-containing mineral wool mat by spreading the chopped, cut-off ends over said mineral wool mat as a uniform layer substantially across its entire breadth, prior to winding it around a core and working it substantially into the shape of a section, yet in such a way, that no chopped, cut-off ends at all are spread over the leading and trailing portions of the mat.

The system of the invention is characterized in that, in order to reuse the cut-off ends of the blocks of pipe section in at least one previous stage of the process of manufacturing said blocks of pipe section, the system comprises a conveying device for conveying the cut-off ends to at least one previous stage of manufacture, at least one shredder for tearing the cut-off ends to pieces, at least one shredder having a spreader provided in connection therewith for scattering the shredded pieces on top of a still uncured mineral wool mat as a uniform layer substantially across its entire breadth, prior to winding it around a core and working it substantially into the shape of a section, yet in such a way that no chopped, cut-off ends are spread over the leading and trailing portions of the mat.

In one embodiment of a pipe section manufactured according to the invention, the recycled material consists of cut-off uneven ends of a cured block of pipe section emerging from the production line of the pipe section itself, consisting essentially of mineral wool which contains at least a binder but possibly also other additives, said ends having been shredded into loose material. The portion of recycled material waste in the total material of a finished pipe section is preferably between 0 and about 15%, more preferably about 5 to 10%.

In one preferred embodiment of the method according to the invention, the cut-off ends of the section blocks, along with all materials contained therein, are reused almost totally or even completely. It is further preferred that utilization of the cut-off ends as a manufacturing material in an earlier manufacturing stage be performed as a continuous process.

In an alternative method which is not part of this invention, the still uncured mineral wool material may be made up of shredded wool (this applies in the case of constructing a pipe section in a space between an inner core and an outer mould). In order for the chopped mineral wool material to remain stuck on the mat upon its winding, it is preferred that the chopped mineral wool material be pressed, e.g. with a press roll, against the mineral wool mat prior to the winding. The cut-off ends are chopped to pieces with the size of preferably about 3-15 mm. The chopping is preferably performed by tearing the same first to coarse pieces and subsequently to finer pieces. The shredding to finer pieces can be preferably performed in a joint operation with the spreading of recycled material on top of the still uncured mineral wool mat. The fire safety of a pipe section can be enhanced by using an additive in the form of a fire retardant. It is also preferred that, in addition to recyclable materials, there will be other additives and/or fire retardants supplied from outside the manufacturing process of the pipe section, either separately, in a composition or in a mixture with the reusable chopped ends. Examples of additives useful as fire retardants are gypsum, slaked lime, calcium carbonate, calcium sulphate hemihydrate, dolomite, aluminium hydroxide, aluminium sulphate, magnesium hydroxide, magnesium carbonate, montmorillonite, bentonite. Examples of additives useful as fire retardants which expand at a high temperature are vermiculite, perlite, pumice, as well as various types of expansible clay.

The system of the invention, in one preferred embodiment thereof, is provided with a shredder which consists of a coarse shredder and a fine shredder. In the system of the invention, the conveying device can preferably be a belt conveyor or a tube system.

In another preferred embodiment of the system according to the invention, the spreader is arranged above the still uncured mat of mineral wool material, and that downstream of the spreader in the traveling direction of the mat is disposed a press roll for pressing the material spread across the mat to a secure contact with the surface of the mat for keeping it there when winding the mat around a core in the actual section forming process.

The invention will now be described more closely with reference to the accompanying drawings, in which
- fig. 1: shows in a schematic view one system implementing the method of the invention, and
- fig. 2: shows in a schematic view another system implementing the method of the invention.

In the solutions depicted here by way of examples, the employed mineral wool mat comprises a thinner mat (3) obtained by cutting from a conventionally manufactured and still uncured mineral wool mat, emerging directly from a basic wool line and containing a binder and a fire retardant.

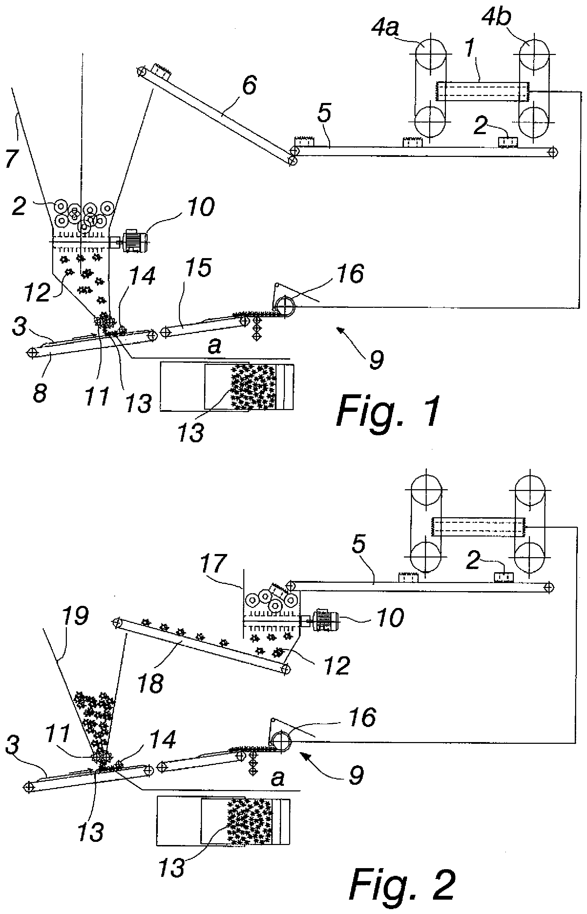

In the system shown in fig. 1, blocks 1 of pipe section are brought to the final shape thereof by cutting off uneven ends 2 thereof in the final manufacturing stage of the blocks 1 of pipe section by means of cutters 4a and 4b.

The cut-off ends 2 are conveyed by belt conveyors 5, 6 to a store 7, which is arranged above a belt conveyor 8 conveying a still uncured mineral wool mat 3 prior to a winding operation 9 of the mineral wool mat 3. The store 7 has a downward converging circumference and comprises both a coarse shredder 10 for the coarse shredding of cut-off ends and a combined fine shredder/spreader 11 for comminuting a coarse-shredded material 12 and scattering the same on top of the mineral wool mat 3 traveling below the fine shredder/spreader 11.

The fine shredder/spreader 11 spreads the fine-shredded material 13 by a lateral action over the mat 3. This is further depicted by showing the coated mat of fig. 1 in a close-up a, in which the mat is seen from above. The shredded material 13 spread over the mat 3 is next pressed by a press roll 14 disposed on the belt conveyor 8 to a secure contact with the surface of the mat 3. The mat 3, coated with shredded material, is advanced further by a second belt conveyor 15 to a winding operation 9 taking place around a core 16, the manufacture of the block 1 of mineral wool section proceeding from here forward in a conventional manner.

Depicted in fig. 2 is another example of a practical application of the invention, in which the process is otherwise identical to that shown in fig. 1, except that, in this case, coarse shredder 10 is not disposed in the store of cut-off ends 2 as in the example of fig. 1, but is present as a separate unit at the bottom end of a drop pipe 17 right next to the end of a belt 5 carrying the cut-off ends 2 away.

A material 12, coarsely shredded by the coarse shredder 10, falls down on a second belt conveyor 18 by which the coarsely shredded material 12 is carried into a store 19. The downwardly 14 converging store 19 has its bottom end provided with a combined fine shredder/spreader 11 for scattering the comminuted material on top of the mineral wool mat 3. Henceforth, the manufacturing process of a block 1 of pipe section to be produced is consistent with the solution shown in fig. 1.

In the practical examples shown in figs. 1 and 2, the shredded material is spread over the mineral wool mat 3 evenly across its entire breadth, yet with no material spread over the leading and trailing portions of the mat 3. This enables providing a good internal and external surface for the block of pipe section and the added wool remains invisible between the wound-up layers. These particles must be pressed slightly against the mineral wool mat 3, as otherwise such particles do not remain stuck on top of the mat 3 in the process of winding.

The amount of raw material can be reduced by as much as the shredded material is increased. The portion of shredded material, in other words the cut-off ends 2, is about 15% of the consumption of raw material. The present invention of ours makes it now possible that machines for making blocks of pipe section would no longer have to produce waste wool at all.

## Claims

1. A method for manufacturing a pipe section of mineral wool for insulation of pipes, wherein a block (1) of cured pipe section, emerging from the production line and consisting essentially of mineral wool which contains at least a binder and possibly also other additives, is brought to its final shape by cutting off its uneven ends, **characterized in that** at least a part of the cut-off ends (2) of the blocks (1) of pipe section are recovered, chopped to pieces and returned to an earlier stage of the production line, and, along with all materials contained therein, are reused in at least one previous manufacturing stage of said blocks of pipe section by adding the same on top of a still uncured, binder-containing mineral wool mat (3) by spreading the chopped, cut-off ends (13) over said mineral wool mat (3) as a uniform layer substantially across its entire breadth, prior to winding it around a core (16) and working it substantially into the shape of a section, yet in such a way, that no chopped, cut-off ends (13) at all are spread over the leading and trailing portions of the mat (3).

2. A method as set forth in claim 1, **characterized in that** the cut-off ends (2) of the section blocks (1), along with all materials contained therein, are reused almost totally or even completely.

3. A method as set forth in claim 1 or 2, **characterized in that** utilization of the cut-offends (2) as a manufacturing material in an earlier manufacturing stage is performed as a continuous process.

4. A method as set forth in any of the preceding claims, **characterized in that** the chopped mineral wool material (13) is pressed to a secure contact with the mineral wool mat (3) prior to a winding operation (9).

5. A method as set forth in any of the preceding claims, **characterized in that** the cut-off ends (2) are chopped to pieces (13) with the size of preferably about 3-15 mm.

6. A method as set forth in any of the preceding claims, **characterized in that** the cut-off ends (2) are chopped by shredding the same first to coarse pieces (12) and subsequently to finer pieces (13).

7. A method as set forth in claim 6, **characterized in that** the shredding to finer pieces (13) is performed in a joint operation with the spreading of recycled material on top of the still uncured mineral wool mat (3).

8. A method as set forth in any of the preceding claims, **characterized in that** the pipe section is provided with an additive in the form of a fire retardant.

9. A method as set forth in any of the preceding claims, **characterized in that**, in addition to recyclable materials, other additives and/or fire retardants are supplied from outside the manufacturing process of a pipe section, either separately, in a composition or in a mixture with the reusable chopped ends (13).

10. A system for manufacturing a pipe section of mineral wool for insulation of pipes, wherein a block (1) of cured pipe section, emerging from the production line and consisting essentially of mineral wool which contains at least a binder and possibly also other additives, is brought to its final shape by cutting off its uneven ends (2), **characterized in that**, in order to reuse the cut-off ends (2) of the blocks (1) of pipe section in at least one previous stage of manufacturing said blocks (1) of pipe section, the system comprises a conveying device (5, 6; 5, 18) for conveying the cut-off ends (2) to at least one previous stage of manufacture, at least one shredder (10, 11) for shredding the cut-off ends to pieces (12, 13), at least one shredder (11) having a spreader (11) provided in connection therewith for scattering the shredded pieces (12, 13) on top of a still uncured mineral wool mat (3) as a uniform layer substantially across its entire breadth, prior to winding it around a core (16) and working it substantially into the shape of a section, yet in such a way that no chopped, cut-off ends (13) are spread over the leading and trailing portions of the mat (3).

11. A system as set forth in claim 10, **characterized in that** the shredder in the system consists of a coarse shredder (10) and a fine shredder (11).

12. A system as set forth in claim 10 or 11, **characterized in that** the conveying device is a belt conveyor (5, 6; 5, 18) or a tube system.

13. A system as set forth in any of claims 10-12, **characterized in that**, the spreader (11) is disposed above the still uncured mat (3) of mineral wool material, and that downstream of the spreader (11) in the traveling direction of the mat is disposed a press roll (14) for pressing the material (13) spread across the mat (3) to a secure contact with a surface of the mat (3) for keeping it there upon winding the mat (3) around a core (16) in the actual section forming process (9).

## Patentansprüche

1. Verfahren für die Herstellung eines Rohrabschnitts aus Mineralwolle zum Isolieren von Rohren, wobei ein Block (1) von ausgehärtetem Rohrabschnitt, der aus der Produktionsstraße austritt und im Wesentlichen aus Mineralwolle besteht, die mindestens ein Bindemittel und möglicherweise auch andere Zusatzmittel enthält, durch Abschneiden von ungleichmäßigen Enden in seine endgültige Gestalt gebracht wird, **dadurch gekennzeichnet, dass** mindestens ein Teil der abgeschnittenen Enden (2) der Blöcke (1) des Rohrabschnitts wiedergewonnen, in Stücke zerhackt und zu einer früheren Stufe der Produktionsstraße rückgeführt wird und zusammen mit allen darin enthaltenen Materialien in mindestens einer vorherigen Herstellungsstufe der Blöcke des Rohrabschnitts durch Zugeben derselben auf noch unausgehärtete, Bindemittel enthaltende Mineralwollematte (3) durch Ausbreiten der zerhackten, abgeschnittenen Enden (13) über die Mineralwollematte (3) als gleichförmige Schicht im Wesentlichen über ihre gesamte Breite vor Wickeln derselben um einen Kern (16) und Arbeiten derselben im Wesentlichen in die Gestalt eines Abschnitts wiederverwendet wird, jedoch derart, dass keine zerhackten, abgeschnittenen Enden (13) über die vorspringenden und hinterherziehenden Teile der Matte (3) überhaupt ausgebreitet werden.

2. Verfahren wie in Anspruch 1 aufgeführt, **dadurch gekennzeichnet, dass** die abgeschnittenen Enden (2) der Abschnittsblöcke (1) zusammen mit allen darin enthaltenen Materialien fast insgesamt oder sogar vollständig wiederverwendet werden.

3. Verfahren wie in Anspruch 1 oder 2 aufgeführt, **dadurch gekennzeichnet, dass** die Verwendung der abgeschnittenen Enden (2) als Herstellungsmaterial in einer früheren Herstellungsstufe als kontinuierliches Verfahren ausgeführt wird.

4. Verfahren wie in einem der vorhergehenden Ansprüche aufgeführt, **dadurch gekennzeichnet, dass** das zerhackte Mineralwollematerial (13) vor der Wickelarbeit (9) in sicheren Kontakt mit der Mineralwollematte (3) gepresst wird.

5. Verfahren wie in einem der vorhergehenden Ansprüche aufgeführt, **dadurch gekennzeichnet, dass** die abgeschnittenen Enden (2) in Stücke (13) der Größe von bevorzugt etwa 3 - 15 mm zerhackt werden.

6. Verfahren wie in einem der vorhergehenden Ansprüche aufgeführt, **dadurch gekennzeichnet, dass** die abgeschnittenen Enden (2) durch Zerschnitzeln derselben in grobe Stücke (12) und daraufhin in feinere Stücke (13) zerhackt werden.

7. Verfahren wie in Anspruch 6 aufgeführt, **dadurch gekennzeichnet, dass** das Zerschnitzeln in feinere Stücke (13) in einem gemeinsamen Arbeitsgang mit dem Ausbreiten des wiederverwerteten Materials auf die noch unausgehärtete Mineralwollematte (3) ausgeführt wird.

8. Verfahren wie in einem der vorhergehenden Ansprüche aufgeführt, **dadurch gekennzeichnet, dass** der Rohrabschnitt mit einem Zusatzmittel in Form eines Feuerschutzmittels versehen wird.

9. Verfahren wie in einem der vorhergehenden Ansprüche aufgeführt, **dadurch gekennzeichnet, dass** zusätzlich zu den wiederverwertbaren Materialien andere Zusatzmittel und/oder Feuerschutzmittel von außerhalb des Herstellungsvorgangs eines Rohrabschnitts entweder getrennt, in einer Zusammensetzung oder in einer Mischung mit den wiederverwendbaren zerhackten Enden (13) angeliefert werden.

10. System für die Herstellung eines Rohrabschnitts aus Mineralwolle zum Isolieren von Rohren, wobei ein Block
(1) von ausgehärtetem Rohrabschnitt, der aus der Produktionsstraße austritt und im Wesentlichen aus Mineralwolle besteht, die mindestens ein Bindemittel und möglicherweise auch andere Zusatzmittel enthält, durch Abschneiden seiner ungleichmäßigen Enden (2) in seine endgültige Gestalt gebracht wird, **dadurch gekennzeichnet, dass** zum Wiederverwenden der abgeschnittenen Enden (2) der Blöcke (1) von Rohrabschnitt in mindestens einer vorherigen Herstellungsstufe der Blöcke (1) des Rohrabschnitts das System Folgendes umfasst: eine Fördervorrichtung (5, 6; 5, 18) zum Befördern der abgeschnittenen Enden
(2) zu mindestens einer vorherigen Herstellungsstufe, mindestens einen Häcksler (10, 11) zum Zerschnitzeln der abgeschnittenen Enden in Stücke (12, 13), mindestens einen Häcksler (11), der einen Ausbreiter (11) aufweist, der in Verbindung damit zum Streuen der zerschnitzelten Stücke (12, 13) auf eine noch unausgehärtete Mineralwollematte (3) als gleichförmige Schicht im Wesentlichen über ihre gesamte Breite vor Wickeln derselben um einen Kern (16) und Arbeiten derselben im Wesentlichen in die Gestalt eines Abschnitts bereitgestellt wird, jedoch derart, dass keine zerhackten, abgeschnittenen Enden (13) über vorspringenden und hinterherziehenden Teile der Matte
(3) überhaupt ausgebreitet werden.

11. System wie in Anspruch 10 aufgeführt, **dadurch gekennzeichnet, dass** der Häcksler in dem System aus einem Grobhäcksler (10) und einem Feinhäcksler (11) besteht.

12. System wie in Anspruch 10 oder 11 aufgeführt, **dadurch gekennzeichnet, dass** die Fördervorrichtung ein Förderband (5, 6; 5, 18) oder ein Röhrensystem ist.

13. System wie in einem der Ansprüche 10 - 12 aufgeführt, **dadurch gekennzeichnet, dass** der Streuer (11) über der noch unausgehärteten Matte (3) aus Mineralwollematerial angeordnet ist und dass stromabwärts vom Streuer (11) in der Vorschubrichtung der Matte eine Druckwalze (14) zum Drücken des über der Matte (3) ausgebreiteten Materials (13) in sicheren Kontakt mit einer Oberfläche der Matte (3) zum Halten desselben darauf während des Wickelns der Matte (3) um einen Kern (16) während des tatsächlichen abschnittbildenden Vorgangs (9) angeordnet ist.

## Revendications

1. Procédé de fabrication d'une section de conduite de laine minérale pour l'isolation de conduites, dans lequel un bloc (1) d'une section de conduite durcie, émergeant de la ligne de production et essentiellement constitué de laine minérale qui contient au moins un liant et éventuellement également d'autres additifs, est façonné en sa forme finale par découpage des extrémités irrégulières, **caractérisé en ce qu'**au moins une partie des extrémités coupées (2) des blocs (1) de la section de conduite est récupérée, hachée en morceaux et renvoyée vers une étape précédente de la ligne de production et, avec tous les matériaux contenus dans celle-ci, est réutilisée dans au moins une étape de fabrication précédente desdits blocs de section de conduite en ajoutant celle-ci sur le dessus d'un tapis (3) de laine minérale contenant un liant, qui n'a pas encore durci en étalant les extrémités coupées hachées (13) sur ledit tapis (3) de laine minérale sous la forme d'une couche uniforme sur sensiblement toute la largeur, avant de l'enrouler autour d'un noyau (16) et de le façonner sensiblement en la forme d'une section, mais de telle sorte qu'aucune extrémité coupée hachée (13) ne soit étalée sur les parties avant et arrière du tapis (3).

2. Procédé selon la revendication 1, **caractérisé en ce que** les extrémités coupées (2) des blocs (1) de la section, ainsi que tous les matériaux contenus dans ceux-ci, sont réutilisées presque totalement ou même totalement.

3. Procédé selon la revendication 1 ou 2, **caractérisé en ce que** l'utilisation des extrémités coupées (2) en tant que matériau de fabrication dans une étape de fabrication précédente est réalisée sous forme de procédé continu.

4. Procédé selon l'une quelconque des revendications précédentes, **caractérisé en ce que** le matériau de laine minérale haché (13) est pressé pour assurer un bon contact avec le tapis (3) de laine minérale avant l'opération d'enroulement (9).

5. Procédé selon l'une quelconque des revendications précédentes, **caractérisé en ce que** les extrémités coupées (2) sont hachées en morceaux (13) avec une taille de préférence d'environ 3 à 15 mm.

6. Procédé selon l'une quelconque des revendications précédentes, **caractérisé en ce que** les extrémités coupées (2) sont hachées par déchiquetage des celles-ci en premier en gros morceaux (12) et ensuite en morceaux plus fins (13).

7. Procédé selon la revendication 6, **caractérisé en ce que** le déchiquetage en morceaux plus fins (13) est réalisé dans une opération conjointe avec l'étalement du matériau recyclé sur le dessus du tapis (3) de laine minérale qui n'a pas encore durci.

8. Procédé selon l'une quelconque des revendications précédentes, **caractérisé en ce que** la section de conduite est dotée d'un additif sous la forme d'un ignifuge.

9. Procédé selon l'une quelconque des revendications précédentes, **caractérisé en ce que**, en plus des matériaux recyclables, d'autres additifs et/ou ignifuges sont fournis depuis l'extérieur du procédé de fabrication d'une section de conduite, séparément, sous forme d'une composition ou sous forme d'un mélange avec les extrémités hachées (13) réutilisables.

10. Système de fabrication d'une section de conduite de laine minérale pour l'isolation de conduites, dans lequel un bloc (1) d'une section de conduite durcie, émergeant de la ligne de production et essentiellement constitué de laine minérale qui contient au moins un liant et éventuellement également d'autres additifs, est façonné en sa forme finale par découpage des extrémités irrégulières (2), **caractérisé en ce que**, afin de réutiliser les extrémités coupées (2) des blocs (1) de la section de conduite dans au moins une étape précédente de fabrication desdits blocs (1) de la section de conduite, le système comprend un dispositif de transport (5, 6 ; 5, 18) pour transporter les extrémités coupées (2) vers au moins une étape précédente de fabrication, au moins une déchiqueteuse (10, 11) pour le déchiquetage des extrémités coupées en morceaux (12, 13), au moins une déchiqueteuse (11) ayant une épandeuse (11) prévue en connexion avec celle-ci pour la dispersion des morceaux déchiquetés (12, 13) sur le dessus d'un tapis (3) de laine minérale qui n'a pas encore durci sous la forme d'une couche uniforme sur sensiblement toute la largeur, avant de l'enrouler autour d'un noyau (16) et de le façonner sensiblement en la forme d'une section, mais de telle sorte qu'aucune extrémité coupée hachée (13) ne soit étalée sur les parties avant et arrière du tapis (3).

11. Système selon la revendication 10, **caractérisé en ce que** la déchiqueteuse dans le système est constituée d'une déchiqueteuse grossière (10) et d'une déchiqueteuse fine (11).

12. Système selon la revendication 10 ou 11, **caractérisé en ce que** le dispositif de transport est un transporteur à courroie (5, 6 ; 5, 18) ou un système de tubes.

13. Système selon l'une quelconque des revendications 10 à 12, **caractérisé en ce que** l'épandeuse (11) est disposée au-dessus du tapis (3) de matériau de laine minérale qui n'a pas encore durci, et qu'en aval de l'épandeuse (11) dans le sens du trajet du tapis, est disposé un rouleau de presse (14) pour presser le matériau (13) étalé sur le tapis (3) pour assurer un bon contact avec la surface du tapis (3) pour le maintenir comme ça lors de l'enroulement du tapis (3) autour d'un noyau (16) dans le procédé de formation de section concret (9).
